# FASCICULE DE BREVET EUROPEEN

(11) **EP 1 378 098 B1**
(45) Date de publication et mention de la délivrance du brevet: **26.10.2005**
(21) Numéro de dépôt: 02730346.0
(22) Date de dépôt: 04.04.2002
(51) Int. Cl.: H04L 12/56

(54) **INSTALLATION ET PROCEDE D'ECHANGE DE DONNEES ENTRE TERMINAUX A DEPLACEMENT CONTRAINT**
ANLAGE UND VERFAHREN ZUM DATENAUSTAUSCH ZWISCHEN ENDGERÄTEN MIT EINGESCHRÄNKTER BEWEGUNGSFREIHEIT
INSTALLATION AND METHOD FOR EXCHANGING DATA BETWEEN TERMINALS WITH CONSTRAINED DISPLACEMENT

(30) Priorité: 09.04.2001 FR 0104827
(43) Date de publication de la demande: 07.01.2004
(73) Titulaire: Université Pierre et Marie Curie (Paris VI), 75252 Paris (FR)
(72) Inventeur: HORLAIT, Eric, F-75007 Paris (FR); LE GRAND, Gwendal, F-75014 Paris (FR)
(74) Mandataire: Ramey, Daniel
(86) Numéro de dépôt international: PCT/FR2002/001184
(87) Numéro de publication internationale: WO 2002/082749

(56) Documents cités:
- WO-A-98/42096
- IRVINE J ET AL: "System architecture for the MOSTRAIN project (Mobile Services for High Speed Trains)" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 1917-1921, XP010229120 ISBN: 0-7803-3659-3

## Description

L'invention concerne le domaine des réseaux de (télé)communications, et notamment les réseaux de type « ad-hoc ».

Du fait de leurs déplacements fréquents, les terminaux mobiles (qui communiquent par voie d'onde) ont de réelles difficultés à échanger des données avec d'autres terminaux, mobiles ou non. Pour tenter de remédier à cet inconvénient, de nombreux réseaux de (télé)communications ont été proposés, et notamment les réseaux ad-hoc. Il s'agit de réseaux autonomes qui se constituent par association temporaire de noeuds mobiles (terminaux) communiquant par radio, et qui peuvent être raccordés à des réseaux fixes (par exemple filaires) par des passerelles et/ou des interfaces. Des tables de routage, de type multi-sauts, permettent d'établir des connexions entre noeuds. Ces tables doivent être régulièrement mises à jour du fait des variations permanentes des états de connectivité des noeuds mobiles qui assurent le routage. De ce fait, la mise en oeuvre des algorithmes de routage est particulièrement délicate.

Par ailleurs, pour assurer la fonction de routage, les noeuds mobiles doivent utiliser leur propre énergie, laquelle est limitée du fait qu'ils utilisent des petites batteries.

En outre, du fait des nombreuses zones d'ombre radio, il arrive fréquemment que des noeuds mobiles ne puissent pas établir de connexion ou être joints.

On connaît par le document d'Irvine J. et al. : « System architecture for the MOSTRAIN project (Mobile Services for High Speed Trains)», Vehicular Technolgy Conference, 1997, IEEE 47th Phoenix, AZ, 4-7 May 1997, New York, USA, ISBN : 0-7803-3659-3, un système de transmission pour des terminaux mobiles à bord d'un train, qui comprend des stations de base installées le long de la voie ferrée et communiquant avec un réseau fixe de transmission, un transmetteur général à bord du train qui est capable de communiquer avec une station de base, et des transmetteurs installés dans les voitures du train et qui sont capables de communiquer avec le transmetteur général et les terminaux mobiles situés dans ces voitures.

On connaît également par le document WO 98/42096, un système et un procédé de transmission d'informations entre les différentes voitures d'un train. Les informations qui proviennent d'un site de gestion du réseau de chemin de fer sont reçues par la locomotive du train et transmises aux voitures concernées. Les informations peuvent par exemple être un ordre de freinage. Ce système permet aux voitures d'un train de communiquer entre elles pour la transmission des informations provenant du site de gestion.

Les solutions proposées par ces deux documents antérieurs organisent la transmission d'informations entre les différentes voitures d'un train, mais ne permettent pas à des trains différents de communiquer entre eux.

L'invention a donc pour but de résoudre tout ou partie des problèmes présentés ci-avant.

Elle propose à cet effet une installation d'échange de données entre terminaux, dans laquelle on prévoit, d'une part, au moins une station de base (fixe) raccordée à au moins un réseau de (télé)communications, et d'autre part, des terminaux mobiles répartis dans des groupes associés chacun à un routeur de données mobile, ces routeurs étant mobiles indépendamment les uns des autres et étant eux-mêmes regroupés en une (ou plusieurs) constellation(s) dans laquelle i) ils sont ordonnés les uns par rapport aux autres depuis un premier routeur jusqu'à un dernier routeur, ii) circulent tous selon un même sens relativement à une trajectoire donnée, et iii) connaissent au moins le routeur mobile qui les précède. Ainsi, les données émises par un terminal, appartenant à un groupe donné, sont transmises au routeur du groupe qui les transmet à son tour au routeur qui le précède, et ainsi de suite jusqu'à ce que les données parviennent au premier routeur qui est le seul, au sein d'une constellation de routeurs, habilité à les transmettre à la station de base. En d'autres termes, les routeurs d'une constellation assurent un relais de données par transfert ascendant ou descendant de proche en proche, d'un routeur à un autre.

Par définition, on parle de relais « ascendant » lorsque les données proviennent d'un terminal mobile et doivent rejoindre le réseau de (télé)communications, et on parle de relais « descendant » lorsque les données proviennent du réseau de (télé)communications et doivent rejoindre un terminal mobile appartenant (temporairement) à une constellation.

Préférentiellement, on forme une multiplicité de constellations (au moins deux), chacune étant associée à une station de base.

L'installation selon l'invention pourra également comporter l'une au moins des caractéristiques mentionnées ci-après, prises séparément ou en combinaison :
* chaque station de base peut comprendre un module d'initialisation capable i) d'adresser un message « test » aux différents routeurs d'une même constellation, leur demandant d'adresser une réponse, puis ii) de désigner premier routeur l'un des routeurs mobiles de la constellation, en fonction des réponses qu'ils ont adressées, et enfin iii) de transmettre au module de gestion du routeur, élu premier routeur, l'adresse de la station de base à laquelle il est associé ;
* chaque routeur mobile comporte un module de gestion et un module d'interrogation qui lui permet de déterminer l'adresse du routeur mobile voisin qui le précède et/ou qui le suit . Dans ce cas, le module de gestion du premier routeur est avantageusement capable i) de déterminer à quel moment il va quitter la constellation à laquelle il appartient, et ii) d'adresser, avant que ne survienne ce moment, d'une part un premier message au module de gestion du routeur mobile qui le suit dans la constellation pour lui communiquer l'adresse de la station de base qui est associée à cette constellation et le désigner (ou l'élire) premier routeur, et d'autre part un second message au module d'initialisation de la station de base à laquelle il est encore associé pour lui signaler qu'il quitte la constellation et lui communiquer les coordonnées du nouveau premier routeur ;
* le module de gestion de chaque routeur mobile est, de préférence, capable d'adresser un troisième message au module de gestion du routeur mobile qui le suit (au moins) pour lui signaler qu'il quitte la constellation, ainsi qu'éventuellement lui fournir les coordonnées du routeur mobile qui le précédait ;
* le module d'interrogation de chaque routeur mobile est préférentiellement capable, dès qu'il a quitté une constellation, de déterminer les coordonnées d'un routeur mobile appartenant à une autre constellation, de manière à s'enregistrer auprès de lui et lui signaler qu'il fait désormais partie de sa constellation ;
* chaque terminal mobile peut comporter un module d'enregistrement capable d'écouter certaines au moins des données que s'échangent les routeurs mobiles de manière à sélectionner l'un d'entre eux en fonction d'un critère choisi, pour lui adresser un quatrième message destiné à se faire enregistrer auprès du routeur mobile et de sa constellation ;
* une base de données peut être prévue pour stocker au moins une table de routage comportant les coordonnées des différentes stations de base associées aux différentes constellation, le sens de déplacement des routeurs au sein des différentes constellations, les coordonnées des routeurs au sein des constellations, et les coordonnées de chaque terminal mobile associé à chaque routeur. Dans ce cas, on prévoit également dans l'installation des moyens d'interrogation capables, en cas de requête de transfert de données d'un terminal quelconque vers un terminal mobile, d'extraire de la base de données les coordonnées de la station de base à laquelle est associée le terminal mobile. Par ailleurs on prévoit de préférence un module de mise à jour de la base de données de manière à la réactualiser, notamment en cas de modification de composition d'une constellation ;
* le module de gestion de chaque routeur mobile est préférentiellement capable, à réception de données destinées à un terminal mobile de sa constellation, de déterminer si ce terminal est enregistré auprès de lui, et, selon la réponse, de transmettre les données au terminal mobile ou de les transférer au routeur mobile qui le suit. Dans ce cas, les moyens d'interrogation sont préférentiellement agencés, en cas de requête de transfert de données entre un terminal quelconque et un terminal mobile, pour extraire de la base de données les coordonnées de la station de base, et éventuellement du routeur, qui sont associés à ce terminal mobile ;
* le module de gestion de chaque routeur mobile peut être avantageusement agencé pour attribuer des portions de bande passante à chacun des terminaux mobiles qui sont enregistrés auprès de lui, de sorte qu'une réservation de bande passante puisse être effectuée.

L'invention propose également un procédé permettant de mettre en oeuvre l'installation présentée ci-avant. Ce procédé se caractérise notamment par le fait qu'il comprend au moins :
- une étape a) dans laquelle on prévoit une (ou plusieurs) station(s) de base raccordée(s) chacune à au moins un réseau de (télé)communications, des terminaux mobiles et des routeurs de données mobiles,
- une étape b) dans laquelle on forme des groupes de terminaux mobiles associés chacun à un routeur mobile, et on forme une (ou plusieurs) constellation(s) avec des routeurs qui sont mobiles indépendamment les uns des autres mais qui circulent tous selon un même sens relativement à une trajectoire, et
- une étape c) dans laquelle on ordonne les routeurs mobiles de chaque constellation les uns par rapport aux autres depuis un premier routeur jusqu'à un dernier routeur, seul le premier routeur d'une constellation étant autorisé à communiquer avec la station de base associée à cette constellation, et on fournit à chaque routeur mobile au moins les coordonnées du routeur mobile qui le précède et/ou du routeur mobile qui le suit pour permettre un relais de données ascendant (ou descendant) par transfert d'un routeur au routeur qui le précède ou qui le suit au sein d'une même constellation.

Préférentiellement, lors de l'étape a) on forme plusieurs constellations (au moins deux) associées à des stations de base différentes.

Le procédé selon l'invention pourra également comporter l'une au moins des caractéristiques mentionnées ci-après, prises séparément ou en combinaison :
* à l'étape a) on peut adresser un message « test » aux différents routeurs d'une même constellation pour qu'ils adressent une réponse, puis élire premier routeur l'un d'entre eux en fonction des réponses adressées, et enfin transmettre au premier routeur élu l'adresse de la station de base à laquelle il est associé. Dans ce cas, on prévoit de préférence une étape complémentaire dans laquelle chaque premier routeur qui s'apprête à quitter sa constellation adresse i) un premier message au routeur mobile qui le suit dans la constellation pour lui communiquer l'adresse de la station de base qui est associée à cette constellation et pour le désigner (ou l'élire) premier routeur, et ii) un second message à la station de base à laquelle il est encore associé pour lui signaler qu'il quitte la constellation et lui fournir les coordonnées du nouveau premier routeur ;
* une autre étape complémentaire peut être prévue pour que le routeur mobile qui s'apprête à quitter une constellation adresse au routeur mobile qui le suit un troisième message lui signalant qu'il quitte la constellation, et éventuellement lui fournissant les coordonnées du routeur mobile qui le précède ;
* lorsqu'un routeur mobile sort d'une constellation il est avantageux de prévoir une étape supplémentaire dans laquelle ce routeur détermine les coordonnées d'un routeur mobile d'une autre constellation, pour s'enregistrer auprès de lui et lui signaler qu'il fait désormais partie de sa constellation ;
* lors de l'étape b) il est particulièrement avantageux que les terminaux mobiles se mettent tous à l'écoute des données que s'échangent les routeurs mobiles, de manière à sélectionner l'un d'entre eux en fonction d'un critère choisi, puis lui adresser un quatrième message destiné à se faire enregistrer auprès de lui ;
* lors de l'étape a) on peut prévoir une base de données pour stocker au moins une table de routage, de sorte qu'à l'étape b) on puisse y stocker les coordonnées des différentes stations de base associées aux différentes constellation, le sens de déplacement des routeurs au sein des différentes constellations, les coordonnées des routeurs au sein des différentes constellations, et les coordonnées des terminaux mobiles associés aux différents routeurs. Dans ce cas, une interrogation de la base de données peut permettre de trouver le chemin le mieux approprié pour transmettre des données d'un terminal mobile vers un terminal quelconque. Cela est également valable dans le sens inverse, notamment lorsqu'un terminal quelconque veut transmettre des données à un terminal mobile d'une constellation. Par ailleurs, il est avantageux de prévoir une étape de mise à jour de la base de données dès qu'une modification survient au sein d'une constellation ;
* lorsqu'un routeur mobile d'une constellation reçoit des données destinées à un terminal mobile de la constellation, on prévoit une étape dans laquelle on détermine au niveau de ce routeur si le terminal mobile recherché est enregistré auprès de lui, et selon la réponse il transmet les données au terminal mobile ou les transfère au routeur mobile qui le suit ;
* une autre étape (ou étape de réservation de bande passante) peut également être prévue pour attribuer des portions de bande passante à certains au moins des terminaux mobiles qui sont enregistrés auprès des routeurs mobiles.

L'invention est particulièrement adaptée aux véhicules de transport, tels que les trains, les rames de métro, les tramways, les bus, les cars, les voitures, les camions, les bateaux, les avions, qui sont équipés d'au moins un routeur embarqué tel que présenté ci-avant.

D'autres caractéristiques et avantages de l'invention apparaîtront à l'examen de la description détaillée ci-après, et des dessins annexés, sur lesquels :
- la figure 1 illustre de façon schématique une partie d'une installation selon l'invention,
- les figures 2A et 2B illustrent schématiquement deux types de couplages à des réseaux extérieurs,
- Les figures 3A et 3B illustrent schématiquement un transfert d'habilitation à communiquer avec une station de base entre un premier routeur qui s'apprête à quitter une constellation et le routeur suivant,
- la figure 4 est un algorithme illustrant l'élection d'un premier routeur au sein d'une constellation,
- la figure 5 est un algorithme illustrant l'enregistrement d'un routeur au sein d'une constellation,
- la figure 6 est un algorithme illustrant l'enregistrement d'un terminal mobile auprès d'un routeur,
- la figure 7 est un algorithme illustrant la transmission d'un message entre un terminal mobile et une station de base, et
- la figure 8 est un algorithme illustrant la transmission d'un message entre une station de base et un terminal mobile d'une constellation.

Dans la description qui suit, il sera fait référence à une installation d'échange de données entre des terminaux mobiles et d'autres terminaux, mobiles ou non, via une ou plusieurs stations de base fixes SBi raccordées à au moins un réseau de (télé)communications, public ou privé.

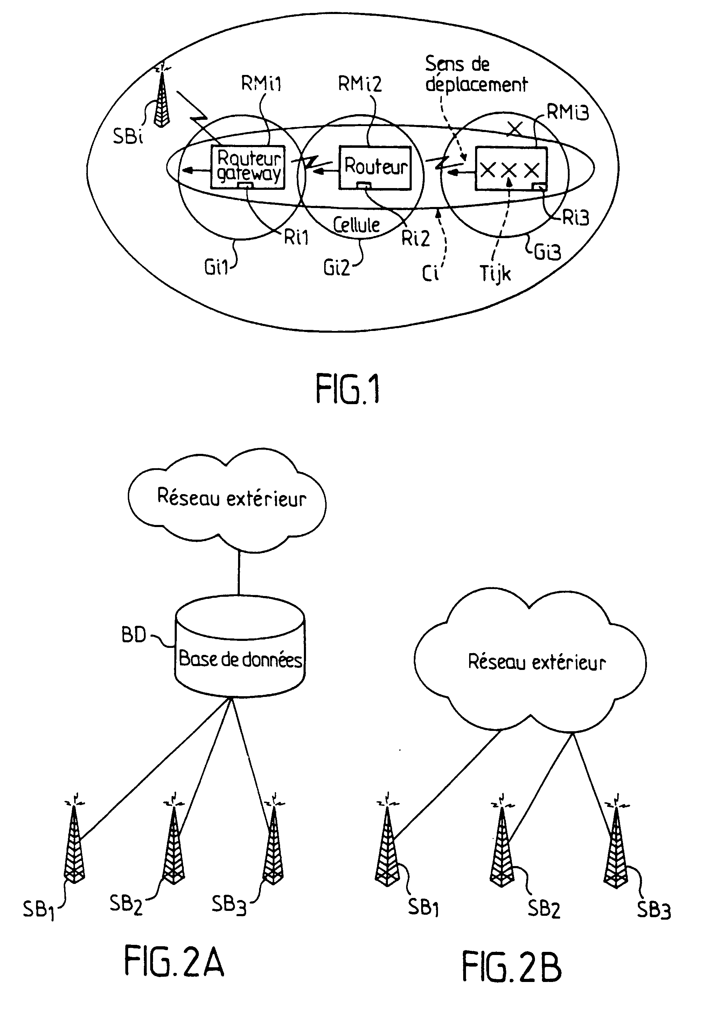

Comme illustré sur la figure 1, une installation selon l'invention comporte au moins une station de base SBi (i=1 à N), fixe et dotée de moyens de (télé)communications (émetteur-récepteur). Chaque station de base SBi est associée à une constellation Ci regroupant un nombre j variable et évolutif de routeurs mobiles Rij (j=1 à M). Dans l'exemple illustré sur la figure 1, M = 3. Par ailleurs, à chaque routeur mobile Rij est associé un nombre k variable (et évolutif) de terminaux mobiles Tijk.

Le nombre de routeurs peut varier d'une constellation à une autre, et une multiplicité de constellations Ci peuvent coexister indépendamment les unes des autres. De même, au sein d'une constellation le nombre de terminaux mobiles associés à un routeur peut varier d'un routeur à l'autre.

Un routeur mobile Rij et les terminaux mobiles Tijk qui sont enregistrés auprès de lui, constituent un groupe Gij (ou cellule). Ces terminaux Tijk ne peuvent échanger des données avec d'autres terminaux qu'en passant par le routeur du groupe Gij auquel ils appartiennent.

Tous les routeurs mobiles Rij d'une même constellation Ci sont dits « à déplacement contraint », du fait qu'ils se déplacent tous sensiblement selon le même sens sur une trajectoire donnée. Dans l'exemple illustré sur la figure 1, tous les routeurs se déplacent de la droite vers la gauche.

Selon l'invention, les routeurs Rij d'une constellation Ci sont ordonnés les uns par rapport aux autres entre un premier routeur Ri1 et un dernier routeur RiM. En d'autres termes, chaque routeur au sein d'une constellation possède une position connue, à chaque instant (s'il est en état de marche), le premier routeur Ri1 étant immédiatement suivi par un second routeur Ri2 puis celui-ci par un troisième routeur Ri3 et ainsi de suite jusqu'au dernier routeur RiM de la constellation Ci concernée.

Dans l'installation selon l'invention, seul le premier routeur Ri1 est autorisé à échanger des données (ou à communiquer) avec la station de base SBi à laquelle sa constellation est associée. Tous les autres routeurs (d'indice j différent de 1) de cette même constellation ne peuvent que transférer, dans un sens ascendant ou dans un sens descendant, des données issues d'un terminal mobile, ou destinées à un terminal mobile, de la constellation.

En d'autres termes, la transmission de données au sein d'une constellation s'effectue de proche en proche du routeur Rij, auprès duquel est enregistré un terminal mobile Tijk souhaitant établir une connexion avec un autre terminal, vers le premier routeur Ri1, ou bien du premier routeur Ri1 vers le routeur Rij auprès duquel est enregistré le terminal mobile recherché Tijk.

Comme cela est illustré sur les figures 2A et 2B, chaque station de base SBi est raccordée à un ou plusieurs réseaux extérieurs. Ce mode de raccordement peut s'effectuer selon deux modes, soit directement, comme illustré sur la figure 2B, soit indirectement via un serveur couplé à une base de données BD, comme illustré sur la figure 2A.

Quand aucune base de données n'est prévue, chaque station de base doit être connectée à un réseau extérieur, au moins. Dans ce cas, et si l'on utilise un protocole de communication de type IP, la station de base présente des fonctionnalités de type "Foreign Agent" du protocole Mobile IP, décrit notamment dans l'article de C. Perkins, « IP Mobility Support », IETF, Network Working Group, RFC 2002, Octobre 1996.

Préférentiellement, une telle base de données BD stocke une ou plusieurs tables de routage, mises à jour régulièrement (par exemple lors de chaque modification survenant à l'intérieur d'une constellation, comme on le verra plus loin), et permettant d'optimiser le routage de données entre un terminal quelconque et un terminal mobile Tijk appartenant à une constellation Ci de l'installation.

Préférentiellement, une table de routage de la base de données BD comporte les coordonnées (ou adresses) des différentes stations de base SBi associées aux différentes constellations, les coordonnées (ou adresses) des routeurs mobiles Rij qui appartiennent aux constellations associées aux stations de base SBI, et les coordonnées (ou adresses) des terminaux mobiles Tijk enregistrés auprès des différents routeurs mobiles Rij. En outre, la table de routage peut comporter des informations concernant le sens de déplacement des routeurs mobiles Rij, ainsi qu'éventuellement le sens de déplacement des terminaux mobiles Tijk qui sont associés auxdits routeurs mobiles Rij.

On reviendra plus loin sur le mode d'utilisation de la table de routage stockée dans la table de données BD.

Pour fonctionner, un routeur mobile Rij doit comporter (ou être couplé à) des moyens d'émission/réception, ainsi qu'un module de gestion et un module d'interrogation qui lui permettent, notamment, de déterminer l'adresse du routeur mobile voisin qui le précède et/ou qui le suit. Un tel routeur mobile peut être réalisé sous la forme de modules logiciels ("software") et/ou de circuits électroniques ("hardware"). Bien entendu, la version réalisée exclusivement sous la forme de modules logiciels est adaptée à des terminaux équipés de moyens d'émission/réception de données, comme par exemple un relais téléphonique ou un terminal portable de type téléphone portable.

Par ailleurs, les stations de base SBi doivent comporter des moyens d'émission/réception et un module de gestion (ou d'initialisation) qui leur permet, notamment, de désigner un routeur mobile Rij de sa constellation en tant que premier routeur Ri1. En outre, l'installation comporte de préférence, par exemple dans le serveur couplé à la base de données BD, un module de mises à jour des informations stockées dans les tables de routage. Enfin, chaque terminal mobile Tijk comporte de préférence un module d'enregistrement qui lui permet d'écouter certaines au moins des données que s'échangent les routeurs mobiles de manière à pouvoir sélectionner l'un d'entre eux en fonction d'un critère choisi, pour lui adresser des messages destinés à se faire enregistrer auprès de lui. Tous ces différents modules peuvent être réalisés sous la forme de modules logiciels ("software") et/ou de circuits électroniques ("hardware").

On va décrire maintenant un exemple de mise en oeuvre d'une installation selon l'invention, dans le cas de rames de métro circulant sur deux voies d'une même ligne, sensiblement parallèles, mais dans des sens opposés. Bien entendu, il ne s'agit que d'un exemple d'application parmi de très nombreux autres, l'invention n'étant pas limitée aux seules rames de métro. En effet, l'invention concerne d'une manière générale tout type de véhicule susceptible d'être équipé d'un routeur mobile (alimenté par l'énergie du véhicule), comme par exemple une voiture, un bus, un car, un tramway, un camion, un train, voire même un avion ou un bateau. Bien entendu, des routeurs mobiles d'une même constellation peuvent appartenir à des véhicules (ou plus généralement des porteurs) de types différents.

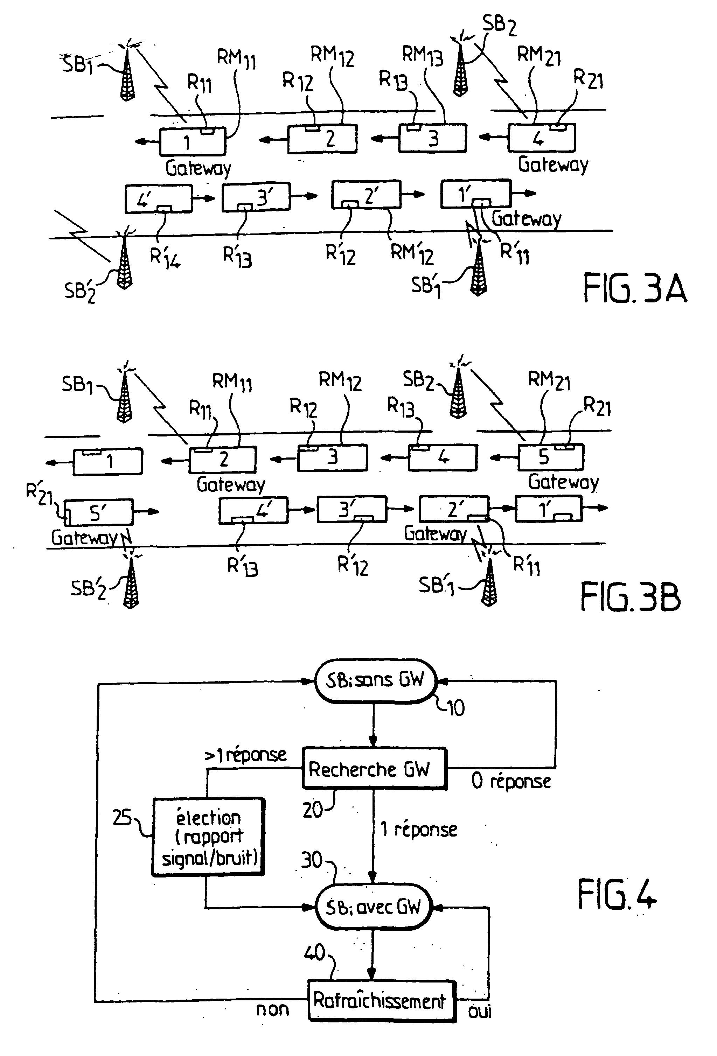

Dans l'exemple illustré sur les figures 3A et 3B, chaque rame de métro RMij est équipée d'au moins un routeur Rij. Par ailleurs, on prévoit une multiplicité de stations de base SBi, fixes et placées en des endroits choisis (tunnel ou quai, ou à l'extérieur). Le premier routeur Ri1 d'une constellation Ci, associée à une station de base SBi, peut communiquer avec ladite station de base SBi en lui envoyant des paquets de données (ou trames, ou analogue) qui sont avantageusement guidés par les parois souterraines.

Préférentiellement, dans ce type d'installation on prévoit des premières stations de base SBi pour les constellations Ci qui circulent dans un sens, sur l'une des deux voies, par exemple de la droite vers la gauche, et une autre multiplicité de stations de base SB'i pour les constellations C'i qui circulent sur l'autre voie dans la direction opposée, par exemple de la gauche vers la droite.

Dans l'exemple illustré sur la figure 3A, la station de base SB1 est associée à une constellation C1 comportant, à un instant donné, les trois routeurs R11, R12 et R13, la station de base SB2 est associée à une seconde constellation C2 comprenant, au même instant, au moins un quatrième routeur R21, et la station de base SB'1 est associée à quatre routeurs mobiles R'11, R'12, R'13 et R'14.

A l'instant illustré sur la figure 3A, seul le premier routeur mobile R11 peut échanger des données avec la station de base SB1, seul le quatrième routeur R21 peut échanger des données avec la station de base SB2, et seul le premier routeur R'11 peut échanger des données avec la station de base SB'1.

Par définition, chaque routeur autorisé à échanger des données avec une station de base est appelé premier routeur ou gateway. On reviendra plus loin sur le mode de désignation (ou d'élection) d'un gateway ou premier routeur.

Sur la figure 3B se trouve illustrée la même portion d'installation que celle illustrée sur la figure 3A, mais quelques instants plus tard. Plus précisément, à cet instant le routeur n°1, précédemment premier routeur désigné par la référence R11, a quitté la constellation C1. En d'autres termes, il n'est plus autorisé à échanger des données avec la station de base SB1. Le nouveau premier routeur R11 de la constellation C1 est désormais le routeur n°2. La procédure de désignation du routeur n°2 en tant que premier routeur sera décrite plus loin.

La constellation C1 comporte donc, désormais, les routeurs n°2, 3 et 4. Le routeur n°4 ayant intégré, en dernière position, la constellation C1 , un nouveau premier routeur a été désigné dans la constellation C2 associée à la station de base SB2. Il s'agit du routeur n°5 qui porte désormais la référence R21.

Dans le même temps, sur l'autre voie de circulation (dans le sens opposé à la première voie), le routeur n°1' est sorti de la constellation C'1 et le routeur n°2' a donc été désigné en tant que premier routeur R'11. La constellation C'1, associée à la station de base SB'1, est donc constituée des routeurs n°2', 3' et 4'. Ici, le routeur n°5' fait toujours partie de la constellation C'2 associée à la station de base SB'2.

Préférentiellement, un routeur qui quitte une constellation cherche immédiatement à intégrer une nouvelle constellation. Dans le cas de rames de métro, notamment, les différentes rames se suivent et il est rare que deux routeurs initialement l'un à la suite de l'autre ne soient plus dans cette situation. En fait, quelle que soit l'application, les routeurs et les mobiles doivent se déplacer dans le même sens (bien entendu lorsque le mobile est enregistré dans la bonne constellation). Chaque routeur mobile comportant au moins les coordonnées (ou l'adresse) du routeur qui le précède (mais également de préférence celles du routeur qui le suit immédiatement), lorsqu'il quitte une constellation il envoie immédiatement des paquets (ou trames) au routeur qui le précédait pour tenter d'intégrer sa constellation, généralement en dernière position. Les paquets pouvant être reçus par plusieurs routeurs, si un routeur qui vient de quitter une constellation entend mieux un autre routeur que celui qui le précédait initialement, et qui se déplace dans le même sens, alors il tente d'intégrer la constellation du routeur qu'il entend le mieux. Si cette tentative échoue (pas d'acquittement) ou bien que le routeur entrant ne possède pas d'informations sur le routeur précédent, il lance un appel, général, aux différents routeurs. En cas de réponses multiples, il sélectionne, par exemple, le signal le plus fort parmi les routeurs qui le précédent et qui vont dans le même sens que lui. On reviendra plus en détail, plus loin, sur ce procédé d'intégration d'un routeur dans une constellation.

On se réfère maintenant à la figure 4 pour décrire un procédé de désignation d'un premier routeur (ou gateway) dans une constellation.

Le procédé débute par une première étape 10 dans laquelle la station de base SBi ne connaît pas encore les coordonnées du premier routeur avec lequel elle doit échanger des données.

Dans une seconde étape 20, la station de base adresse des messages en direction des routeurs qui sont dans sa portée radio pour leur demander de renvoyer une réponse. En l'absence de réponse, on retourne à l'étape 10 de sorte que la station de base réitère l'étape 20. Si la station de base SBi ne reçoit qu'une seule réponse, alors on passe à une étape 30. Enfin, si à l'étape 20 la station de base reçoit plusieurs réponses, alors dans une étape 25 elle sélectionne l'un des routeurs répondant en fonction d'un critère choisi. Préférentiellement, la station de base sélectionne le routeur dont la réponse présente le meilleur rapport signal/bruit. Puis, on passe à l'étape 30.

Dans cette étape 30, la station de base désigne le routeur sélectionné, ou qui a émis l'unique réponse, en tant que premier routeur Ri1. A cet effet, elle adresse au module de gestion du routeur Ri1 ses propres coordonnées (ou son adresse) et lui signale qu'il a été désigné en tant que premier routeur et que de ce fait il est autorisé à échanger des données avec elle.

Enfin, si l'installation comporte une base de données BD dans laquelle se trouve(nt) stockée(s) une ou plusieurs table(s)de routage, alors dans une étape 40 on procède au rafraîchissement de la (ou des) table(s) de routage, par exemple avec le module de mises à jour du serveur. En cas d'impossibilité de rafraîchissement, on retourne à l'étape 10.

Une fois la mise à jour effectuée, la station de base SBi peut commencer à dialoguer avec le premier routeur (ou gateway) Ri1 qu'elle vient d'élire.

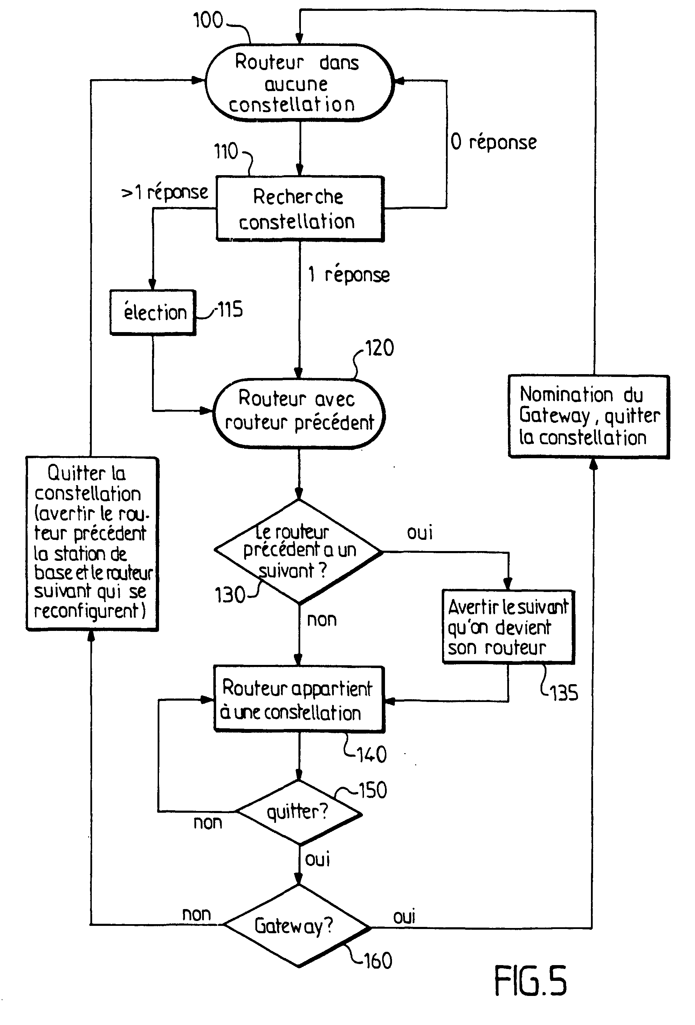

On se réfère maintenant à la figure 5 pour décrire un procédé d'enregistrement d'un routeur mobile Rij au sein d'une constellation Ci.

Ce procédé débute par une étape 100, lorsqu'un routeur mobile vient de sortir d'une constellation ou tente d'intégrer pour la première fois une constellation.

Dans une étape 110, le routeur mobile Rij, entrant, émet des messages à destination des routeurs qui l'environnent, et requérant de leur part une réponse. Cette émission est gérée par le module de gestion du routeur, couplé éventuellement à son module d'interrogation. Si le routeur entrant ne reçoit pas de réponse, alors on retourne à l'étape 100 pour réitérer l'étape 110. Si le routeur mobile entrant ne reçoit qu'une seule réponse, alors on passe à une étape 120 qui sera décrite plus loin. Enfin, si le routeur mobile entrant reçoit plusieurs réponses, alors dans une étape 115 il effectue, à l'aide de son module de gestion, une sélection de l'un des routeurs dont il a reçu une réponse. Par exemple, et de préférence, il sélectionne le routeur mobile dont la réponse présente le meilleur rapport signal/bruit. Puis on passe à l'étape 120.

Dans cette étape 120, le routeur mobile entrant s'inscrit (ou s'enregistre) auprès du routeur qu'il a sélectionné, ou qui a émis l'unique réponse, de manière à lui signaler qu'il vient d'intégrer sa constellation et qu'il se trouve désormais derrière lui.

Puis, dans une étape 130, le routeur entrant effectue un test pour déterminer si le routeur auprès duquel il vient de s'inscrire était préalablement suivi par un routeur. En d'autres termes, ce test 130 est destiné à déterminer si le routeur entrant s'est intercalé entre deux routeurs d'une même constellation, ou bien s'il se trouve placé en dernière position au sein de ladite constellation.

Si le résultat du test effectué à l'étape 130 indique qu'il n'existait pas de routeur suivant, alors on passe à une étape 140 qui sera décrite plus loin. En revanche, si le résultat du test 130 indique que le routeur entrant s'est intercalé entre deux routeurs, alors dans une étape 135 le routeur entrant adresse au routeur qui le suit un message lui signalant qu'il est venu s'intercaler et que par conséquent c'est à lui qu'il doit désormais transférer des données qui doivent remonter jusqu'à la première station Ri1 de la constellation Ci, et non plus au routeur qui le précédait. En fait, le routeur regarde s'il doit router les paquets d'un autre routeur qui se trouve derrière lui. Puis on passe à l'étape 140 dans laquelle le routeur entrant est définitivement enregistré au sein de la constellation.

Lorsque l'installation comporte une base de données BD, il est avantageux de rafraîchir sa ou ses tables de routage afin de prendre en compte un enregistrement. Pour ce faire, le routeur qui précède immédiatement le routeur entrant transmet un message au routeur qui le précède immédiatement, jusqu'à ce que ce message atteigne le premier routeur Ri1 de la constellation Ci, puis la station de base SBi qui lui est associée.

Puis, dans une étape 150, on effectue un test pour déterminer si la procédure d'inscription est terminée. Si ce n'est pas le cas, on retourne à l'étape 140. En revanche, si tel est le cas, on effectue dans une étape 160 un nouveau test pour déterminer s'il y a lieu d'élire un nouveau premier routeur (ou gateway) au sein de la constellation. Ces étapes concernent le cas où le mobile quitte la constellation, par exemple lorsqu'il sort du traffic.

Le retour à l'étape 100 par la gauche, illustré sur la figure 5, en sortie de l'étape 160, permet de quitter le réseau. En revanche, le retour par la droite concerne le cas où un premier routeur entre dans la constellation qui le précède.

Cela met fin à la procédure d'enregistrement d'un routeur dans une constellation.

Préférentiellement, lorsqu'un routeur souhaite quitter sa constellation, il avertit au moins le routeur qui le précède. Bien entendu, si ce routeur est un premier routeur (ou gateway), il avertit également la station de base pour lui signaler qu'il quitte la constellation et lui transmettre les coordonnées (ou adresse) du premier routeur qu'il a désigné. Si le routeur sortant n'est pas un premier routeur, alors il avertit le routeur qui le suit de sorte que ce dernier modifie son routage. Préférentiellement, cela s'effectue par la communication des coordonnées (ou adresse) du routeur qui le précédait. Par ailleurs, il est préférable que le routeur sortant prévienne le routeur qui le précède de sorte que le routage soit réactualisé le plus rapidement possible. Cela permet également de réactualiser la base de données, lorsqu'elle fait partie de l'installation, mais également d'éviter d'attendre une période de temporisation pour détecter qu'un routeur a disparu d'une constellation.

En cas de panne d'un routeur mobile au sein d'une constellation, le désenregistrement du routeur s'effectue après une période de temporisation, puis après remontée de l'information grâce au routeur qui détecte la panne. En effet, un routeur défaillant n'est plus en mesure de prévenir les autres routeurs de la constellation. Ce n'est donc qu'à l'expiration de la période de temporisation qu'un routeur qui vient d'adresser des données au routeur défaillant s'aperçoit qu'il ne lui répond pas, et que, par conséquent, le routage doit être reconfiguré au sein de la constellation.

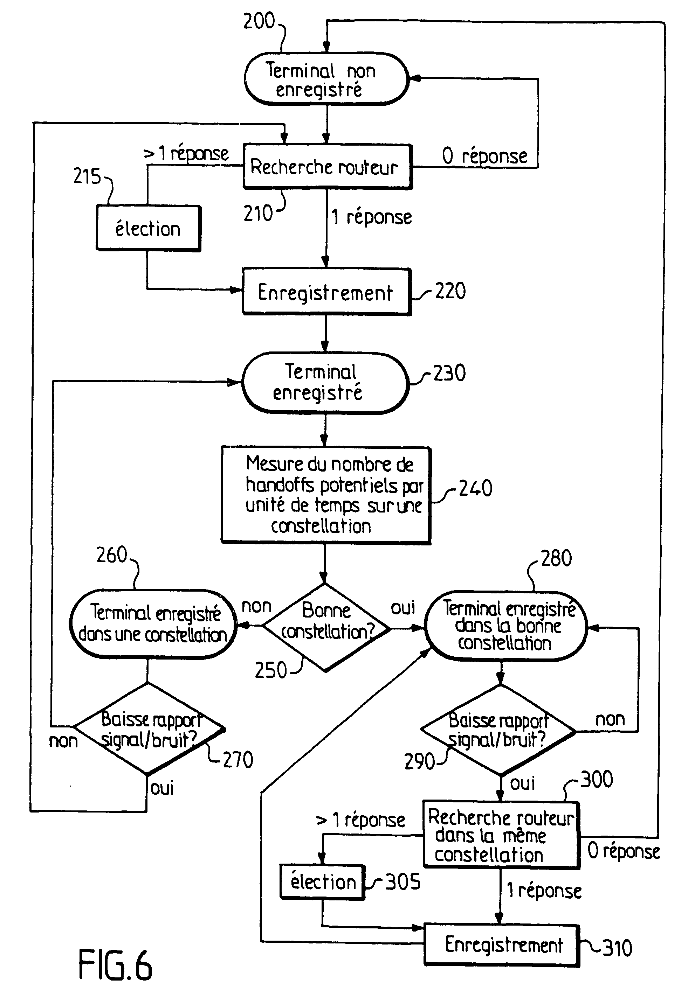

On se réfère maintenant à la figure 6 pour décrire un procédé d'enregistrement d'un terminal auprès d'un routeur appartenant à une constellation.

La procédure d'enregistrement commence par une étape 200. Cette étape est suivie par une étape 210 dans laquelle le terminal mobile qui cherche à s'inscrire auprès d'un routeur émet des messages destinés aux routeurs qui l'environnent, pour leur demander de répondre. En cas d'absence de réponse, on retourne à l'étape 200. Si le terminal mobile reçoit une unique réponse, alors on passe à une étape 220 qui sera décrite plus loin. En revanche, si le terminal mobile reçoit plusieurs réponses, alors dans une étape 215 il sélectionne l'un des routeurs ayant émis une réponse, en fonction d'un critère choisi. Préférentiellement, la sélection s'effectue sur la base du rapport signal/bruit le meilleur. Puis, on passe à l'étape 220.

Cette étape 220 est destinée à faire enregistrer le terminal mobile auprès du routeur ayant émis l'unique réponse, ou qui a été sélectionné à l'étape 215. Pour ce faire, le terminal adresse au routeur sélectionné un message contenant ses coordonnées (ou adresse). Puis, le routeur mobile, auprès duquel tente de s'enregistrer le terminal mobile, renvoie un message (ou accusé de réception) audit terminal mobile pour lui signaler qu'il l'a bien enregistré. Le résultat de cette dernière opération est matérialisé par l'étape 230, qui doit plus être considérée comme un état que comme une action.

Un problème peut survenir à ce stade. En effet, un routeur ne peut généralement pas savoir dans quel sens se dirige le terminal mobile qui souhaite s'inscrire auprès de lui. En d'autres termes, un terminal mobile risque de s'enregistrer dans une constellation qui se déplace dans un sens opposé au sien. Pour remédier à ce problème le terminal mobile, de préférence (mais il pourrait également s'agir du terminal dans lequel est implantée la base de données lorsqu'il s'aperçoit que le mobile change de constellation), mesure dans une étape 240 le nombre de « handoffs » par unité de temps au sein d'une même constellation. En effet, si le terminal mobile n'est pas entré dans le trafic, il va effectuer des handoffs avec différents routeurs mobiles d'une constellation, voire même de constellations différentes. Si le mobile est dans le traffic, mais qu'il se déplace à une vitesse différente de celle des routeurs, il va effectuer des handoffs entre les routeurs d'une même constellation ou de constellations différentes mais dans lesquelles les routeurs se déplacent selon le même sens.

Puis, dans une étape 250 on effectue un test sur le nombre de handoffs comptabilisés à l'étape 240, de manière à déterminer si le terminal mobile s'est inscrit au sein de la bonne constellation. Ce test peut être effectué sous la forme d'une comparaison avec un seuil choisi.

Si le test 250 indique que le terminal mobile s'est enregistré auprès d'une mauvaise constellation, alors ledit mobile effectue une étape 260 pour déterminer la constellation dans laquelle il s'est enregistré. Puis, on effectue dans une étape 270 un test sur l'évolution de la valeur du rapport signal/bruit des messages transmis par le terminal mobile. Si le test de l'étape 270 n'indique pas de diminution de valeur du rapport signal/bruit, alors on retourne à l'étape 230 pour recommencer un nouvel enregistrement. En revanche, si le test de l'étape 270 indique une baisse de la valeur du rapport signal/bruit, alors on retourne à l'étape 210.

Si le test effectué à l'étape 250 indique que le terminal mobile s'est enregistré auprès d'une bonne constellation, alors on effectue une étape 280 destinée à déterminer si le terminal mobile s'est enregistré auprès de la meilleure des constellations possibles. On effectue alors un test dans une étape 290, pour déterminer si la valeur du rapport signal/bruit des messages émis par le terminal mobile varie au sein de la constellation. S'il n'y a pas de variation détectée, alors on retourne à l'étape 280 et l'on considère que le terminal s'est enregistré au sein de la meilleure constellation possible. En revanche, si l'on détecte à l'étape 290 une baisse de la valeur du rapport signal/bruit des messages émis par le terminal mobile, alors dans une étape 300 on recherche un routeur mobile au sein de la constellation auprès de laquelle s'est enregistré le terminal mobile. Cela sert principalement lorsque le mobile et son routeur se déplacent selon des vitesses différentes (par exemple sur une route). Pour ce faire, on adresse des messages aux différents routeurs de la constellation pour qu'ils renvoient une réponse. Si aucune réponse n'est reçue, alors on retourne à l'étape 200. Si une unique réponse est reçue, alors on passe à une étape 310 qui sera décrite plus loin. Enfin, si plusieurs réponses sont reçues par le terminal mobile, alors ce terminal mobile effectue une étape 305 dans laquelle il sélectionne l'un des routeurs dont il a reçu une réponse. Le critère de sélection peut être, par exemple, la valeur du rapport signal/bruit de la réponse reçue. Puis, on passe à l'étape 310.

Dans cette étape 310, on procède à l'enregistrement « provisoire » du terminal mobile auprès du routeur sélectionné (ou choisi). Puis l'on retourne à l'étape 280, ce qui met fin au procédé d'enregistrement d'un terminal auprès d'un routeur.

Dès lors qu'un terminal mobile est enregistré auprès d'un routeur mobile d'une constellation, ce routeur se charge de relayer les paquets (ou trames), que le terminal mobile lui envoie, vers le routeur qui le précède, jusqu'à ce qu'ils atteignent le premier routeur qui se charge alors de les transmettre à la station de base de la constellation. Mais, ce routeur mobile se charge également de transmettre les données destinées au terminal mobile inscrit auprès de lui, et qui proviennent du routeur qui le précède.

Si les terminaux mobiles se déplacent sensiblement à la même vitesse que les routeurs mobiles auprès desquels ils sont enregistrés (par exemple lorsque le routeur mobile est embarqué dans un véhicule qui transporte les terminaux mobiles), la signalisation entre les terminaux mobiles et les routeurs mobiles reste très légère. Par contre, si les routeurs mobiles et les terminaux mobiles se déplacent à des vitesses différentes, les terminaux mobiles vont effectuer des handoffs (qui peuvent être relativement fréquents) entre les différents routeurs d'une même constellation. Par ailleurs, si les routeurs mobiles ne se déplacent pas tous à la même vitesse (c'est notamment le cas des routeurs embarqués dans des voitures), le routage entre routeurs va également être légèrement modifié. Il faut alors recaler les routeurs les uns par rapport aux autres au sein d'une même constellation, en fonction des dépassements et/ou des immobilisations.

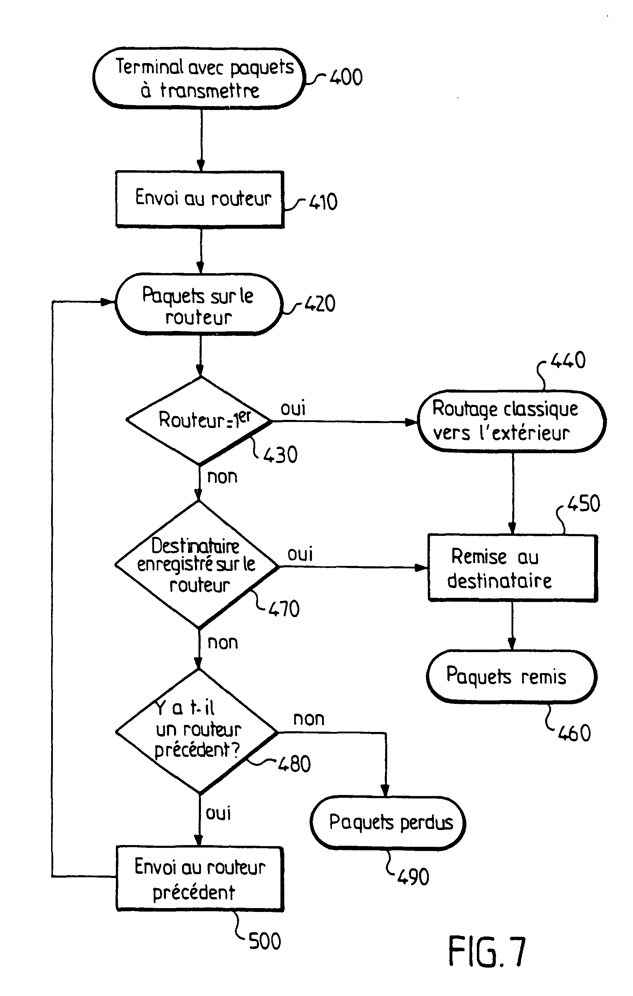

On se réfère maintenant à la figure 7 pour décrire un procédé de transmission de données entre un terminal mobile d'une constellation et un terminal quelconque, par exemple raccordé au réseau extérieur via la station de base de la constellation.

Ce procédé commence dans une étape 400. Un terminal mobile qui est enregistré au sein d'une constellation signale qu'il souhaite établir une connexion avec un autre terminal. Dans une étape 410 il adresse alors au routeur mobile, auprès duquel il s'est enregistré, des paquets (ou trames) contenant les coordonnées du terminal avec lequel il souhaite établir une connexion pour échanger des données. Puis, dans une étape 420, le routeur mobile (s'il fait toujours partie de la constellation) réceptionne les paquets. Ensuite, dans une étape 430, le routeur qui vient de recevoir les paquets vérifie s'il est un premier routeur (ou gateway). Si tel est le cas, alors dans une étape 440 le routeur transmet les paquets à la station de base, qui les transmet dans une étape 450 au destinataire, via le réseau extérieur, éventuellement après une interrogation de la base de données.

En revanche, si le test effectué à l'étape 430 indique que le routeur récepteur n'est pas le premier routeur de la constellation, alors dans une étape 470 le routeur récepteur des paquets détermine si le terminal destinataire est enregistré auprès de lui. Si tel est le cas, alors on passe à l'étape 450. En revanche, si ce n'est pas le cas, le routeur récepteur détermine dans une étape 480 si il est précédé par un autre routeur. S'il n'y a pas de routeur précédent (cas où les paquets sont parvenus au premier routeur (ou gateway)), alors dans une étape 490 ce routeur récepteur met fin à la transmission en considérant que les paquets sont perdus. En revanche, s'il existe un routeur précédent, il lui transmet les paquets, puis on retourne à l'étape 420.

En fait, dès lors qu'un terminal mobile n'est pas enregistré au sein d'une constellation, les données sont transmises à la station de base qui se charge alors de déterminer le meilleur chemin d'accès au terminal destinataire, éventuellement après interrogation de la base de données. C'est notamment le cas lorsqu'un terminal mobile appartenant à une première constellation souhaite échanger des données avec un terminal mobile appartenant à une autre constellation.

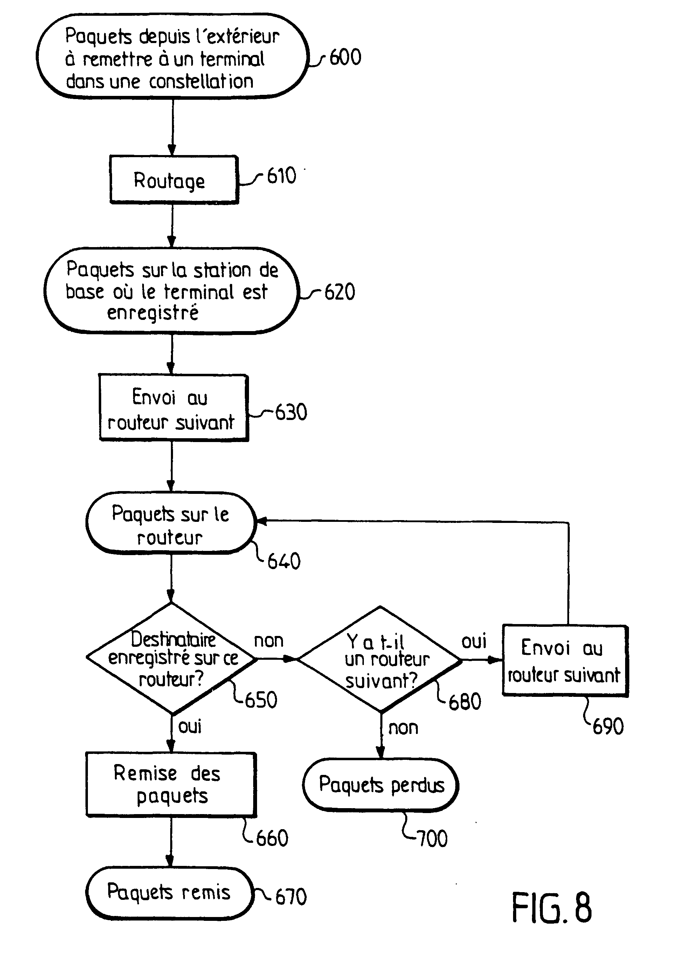

On se réfère maintenant à la figure 8 pour décrire un procédé de transmission de données d'un terminal quelconque, par exemple raccordé au réseau extérieur, vers un terminal mobile appartenant à une constellation.

Le procédé commence par une étape 600 dans laquelle un terminal, par exemple externe, transmet des paquets destinés à un terminal mobile appartenant à une constellation. Dans une étape 610, on détermine le chemin permettant d'optimiser la transmission. Préférentiellement, cela s'effectue à l'aide d'un serveur raccordé à la base de données. On peut ainsi déterminer la station de base qui est associée à la constellation dans laquelle est enregistré le terminal mobile destinataire. Dans une étape 620, les paquets sont transmis à la station de base déterminée. Puis, dans une étape 630, la station de base transfère les paquets au premier routeur de sa constellation.

Dans une étape 640, le premier routeur réceptionne les paquets. Puis, dans une étape 650 il effectue un test pour déterminer si le terminal mobile destinataire est enregistré auprès de lui. Si tel est le cas, alors dans une étape 660 le routeur mobile transmet les paquets au terminal mobile destinataire, puis dans une étape 670 on met fin à la procédure de transmission des paquets.

En revanche, si le résultat du test effectué à l'étape 650 est négatif, alors le routeur mobile transfère les paquets au routeur qui le suit immédiatement. Bien entendu, pour effectuer ce transfert, il faut au préalable déterminer s'il existe un routeur suivant. C'est l'objet de l'étape 680. S'il existe réellement un routeur après le routeur qui a reçu les paquets, alors dans une étape 690 on lui transmet les paquets, puis on retourne à l'étape 640. En revanche, s'il n'existe pas de routeur suivant, alors on met fin à la procédure dans une étape 700. Les paquets arrivés au niveau du routeur sont alors perdus.

L'invention peut également offrir d'autres services. En effet, les différents protocoles (ou procédés) qui ont été décrits en référence aux figures 4 à 8, permettent une connexion à un réseau extérieur, mais sans garantie de qualité du service, par exemple en terme de débit. L'invention peut remédier à cet inconvénient.

On peut en effet estimer le débit maximal de chaque routeur mobile en fonction de la capacité offerte au sein de chaque groupe (ou cellule). Cette estimation est effectuée à partir d'une information de la station de base ou de la base de données. En fait, on effectue une statistique pour déterminer combien il y a de routeurs par constellation, au maximum. En fonction du résultat, on effectue un contrôle d'admission. Par exemple, si l'on a n routeurs dans une constellation, et que chacun offre k Mbit/s, cela fait kn Mbit/s à transporter entre les routeurs, dans le pire des cas. Cette valeur doit rester inférieure à ce qui peut être transmis en mode « point par point » entre deux routeurs afin de garantir que cela soit toujours disponible.

Le "microréseau", que constituent les routeurs mobiles d'une même constellation, peut donc être géré à l'aide d'un mécanisme de type "Diffserv", décrit notamment dans l'article de S. Blake, D. Black, M. Carlson, E. Davies, Z. Wang, W. Weiss, "an architecture for differentiated services", RFC 2475, décembre 1998.

A l'intérieur de chaque groupe ou cellule, la bande passante peut ainsi être partagée après distribution, par exemple, de jetons, conformément à la technique "CLEP", décrite notamment dans le document brevet FR - A - 2 765 057. L'installation permet donc d'effectuer des réservations de bandes passantes entre un terminal mobile et une station de base par l'intermédiaire d'un microréseau de routeurs mobiles.

Le routage selon l'invention est particulièrement simple dans la mesure où il n'existe qu'une seule et unique route entre un routeur mobile et un premier routeur (ou gateway), et par conséquent entre un routeur mobile et une station de base. Un routeur mobile appartenant à une constellation n'a donc qu'à connaître les mobiles qui sont enregistrés auprès de lui (précédent et suivant) ainsi que le chemin pour atteindre la station de base.

Par ailleurs, il n'est plus nécessaire que les routeurs couvrent des zones importantes, puisqu'il suffit d'établir une connexion entre deux routeurs successifs.

En outre, les routeurs mobiles pouvant être implantés dans des véhicules possédant des moyens importants d'alimentation en énergie, ce ne sont plus les terminaux mobiles des utilisateurs qui doivent puiser de l'énergie dans leurs propres batteries pour assurer le routage de données. De plus, cela permet aux routeurs de disposer de puissances d'émission importantes.

Comme cela résulte de la description précédente, les procédés (ou protocoles) selon l'invention sont particulièrement adaptés aux routeurs implantés dans des véhicules dont les positionnements respectifs (ordre) évoluent peu ou pas. La signalisation associée à un tel protocole devient en effet particulièrement légère, notamment lorsque l'on utilise un routage de type hiérarchique. A titre d'exemple, grâce à l'invention, des usagers du métro peuvent disposer d'une connectivité à un réseau public, tel qu'Internet, qu'ils soient placés sur un quai, ou à l'intérieur d'un wagon.

D'une manière générale, les protocoles selon l'invention peuvent fonctionner pour tout type de mobile à déplacement contraint, c'est-à-dire non aléatoire. Typiquement, tout véhicule se déplaçant sur une route, ou une trajectoire peut être équipé d'un routeur mobile du type de celui décrit précédemment. Dans le cas de véhicules qui peuvent se doubler à chaque instant, comme par exemple les voitures ou les camions, on peut imaginer deux types de routage. Dans un premier type de routage, chaque véhicule sert de routeur à tous les terminaux mobiles qui se trouvent à l'intérieur. Dans ce cas, il est clair qu'il existe beaucoup de routeurs dans chaque constellation et peu de terminaux mobiles enregistrés auprès de chaque routeur mobile. Dans un second type de routage, certains véhicules peuvent servir de routeurs à plusieurs autres véhicules et dans ce cas il peut y avoir beaucoup de terminaux associés à chaque routeur mobile, mais le routage est sensiblement plus complexe (et par conséquent nécessite une signalisation plus importante du fait de l'augmentation probable des handoffs entre les terminaux et les routeurs).

Les piétons équipés de terminaux mobiles peuvent également bénéficier des protocoles de l'invention. En effet, ils peuvent être enregistrés auprès de véhicules, éventuellement en utilisant des informations de type GPS qui permettent de déterminer leur sens de déplacement relativement aux véhicules équipés de routeurs mobiles. Mais, des piétons peuvent également former des constellations avec d'autres piétons et devenir ainsi indifféremment terminal mobile et routeur mobile. Mais, il est clair que dans cette situation, le terminal mobile du piéton doit puiser dans ses propres batteries pour assurer le routage.

L'invention ne se limite pas aux modes de réalisation de dispositif, d'installation et de procédé décrits ci-avant, seulement à titre d'exemple, mais elle englobe toutes les variantes que pourra envisager l'homme de l'art dans le cadre des revendications ci-après.

Notamment, l'invention ne se limite pas à l'application aux rames de métro, mais concerne d'une manière générale tout type de véhicule susceptible d'être équipé d'un routeur mobile (alimenté par l'énergie du véhicule), comme par exemple une voiture, un bus, un car, un tramway, un camion, un train, voire même un avion ou un bateau.

## Revendications

1. Installation d'échange de données entre terminaux, comprenant au moins une station de base (SBi) raccordée à au moins un réseau de communications, une multiplicité de groupes (Gij) de terminaux mobiles (Tijk) associés chacun à un routeur de données (Rij) mobile, **caractérisé en ce que** lesdits routeurs sont mobiles indépendamment les uns des autres et sont propres à être regroupés en au moins une constellation (Ci) dans laquelle ils sont ordonnés les uns par rapport aux autres entre un premier routeur (Ri1) et un dernier routeur (RiM), circulent tous selon un même sens relativement à une trajectoire donnée et connaissent le routeur mobile qui les précède et/ou le routeur mobile qui les suit, de manière à permettre un relais de données ascendant ou descendant par transfert d'un routeur au routeur qui le précède ou qui le suit au sein d'une même constellation, et seul ledit premier routeur (Ri1) d'une constellation étant autorisé à communiquer avec ladite station de base (SBi).

2. Installation selon la revendication 1, **caractérisée en ce qu'**elle comporte au moins deux constellations (C1,C2) associées à des stations de base différentes (SB1 ,SB2).

3. Installation selon l'une des revendications 1 et 2, **caractérisée en ce que** chaque station de base (SBi) comprend un module d'initialisation agencé pour i) adresser un message test à destination des routeurs (Rij) d'une même constellation (Ci), requérant de chacun une réponse, ii) désigner premier routeur (Ri1) l'un desdits routeur de la constellation, en fonction des réponses reçues, et iii) transmettre à un module de gestion dudit premier routeur l'adresse de la station de base à laquelle la constellation (Ci) est associée.

4. Installation selon l'une des revendications 1 à 3, **caractérisée en ce que** chaque routeur mobile (Rij) comporte un module de gestion et un module d'interrogation propres à déterminer l'adresse d'un routeur mobile voisin qui le précède et/ou qui le suit.

5. Installation selon la revendication 4, **caractérisée en ce que** ledit module de gestion du premier routeur (Rij) est agencé pour i) déterminer un intervalle temporel pendant lequel ledit premier routeur va quitter sa constellation, et ii) adresser avant l'expiration dudit intervalle, d'une part, au module de gestion du routeur mobile qui le suit dans la constellation (Ci) un premier message dans lequel il lui communique l'adresse de la station de base (SBi) associée à cette constellation (Ci) et désigne premier routeur (Ri1) son routeur mobile, et d'autre part, au module d'initialisation de la station de base à laquelle il est encore associé un second message signalant que son routeur mobile quitte la constellation et fournissant les coordonnées du nouveau premier routeur.

6. Installation selon l'une des revendications 4 et 5, **caractérisée en ce que** ledit module de gestion de chaque routeur mobile (Rij) est agencé pour adresser au module de gestion d'au moins le routeur mobile qui le suit un troisième message dans lequel il lui signale que son routeur mobile quitte la constellation (Ci).

7. Installation selon la revendication 6, **caractérisée en ce que** ledit module de gestion de chaque routeur mobile (Rij) est agencé pour fournir dans ledit troisième message les coordonnées du routeur mobile qui précède son routeur mobile.

8. Installation selon l'une des revendications 4 à 7, **caractérisée en ce que** le module d'interrogation de chaque routeur mobile (Rij) qui vient de quitter une constellation est agencé pour déterminer les coordonnées d'un routeur mobile d'une autre constellation, de manière à s'enregistrer auprès de celui-ci et signaler qu'il fait désormais partie de sa constellation.

9. Installation selon l'une des revendications 1 à 8, **caractérisée en ce que** chaque terminal mobile (Tijk) comporte un module d'enregistrement agencé pour écouter certaines au moins des données échangées par les routeurs mobiles (Rij) et sélectionner l'un desdits routeurs mobiles écoutés, en fonction d'un critère choisi, pour lui adresser un quatrième message destiné à se faire enregistrer auprès dudit routeur mobile.

10. Installation selon l'une des revendications 2 à 8, **caractérisée en ce qu'**elle comprend une base de données (BD) dans laquelle se trouve stockée au moins une table de routage comportant les coordonnées de chaque station de base (SBi), le sens de déplacement des routeurs (Rij) au sein de chaque constellation (Ci), les coordonnées des routeurs (Rij) au sein de chaque constellation (Ci), les coordonnées de chaque terminal mobile (Tijk) associé à chaque routeur, et des moyens d'interrogation agencés, en cas de requête de transfert de données entre un terminal quelconque et un terminal mobile, pour extraire de ladite base de données les coordonnées de la station de base à laquelle est associée ledit terminal mobile.

11. Installation selon l'une des revendications 4 à 10, **caractérisée en ce que** le module de gestion de chaque routeur mobile (Rij) est agencé, à réception de données destinées à un terminal mobile (Tijk) de sa constellation (Ci), pour déterminer si ledit terminal est enregistré auprès de son routeur, et en fonction du résultat de cette détermination soit transmettre les données audit terminal mobile, soit transférer lesdites données au routeur mobile qui le suit.

12. Installation selon l'une des revendications 10 et 11, **caractérisée en ce que** lesdits moyens d'interrogation sont également agencés, en cas de requête de transfert de données entre un terminal quelconque et un terminal mobile (Tijk), pour extraire de ladite base de données (BD) les coordonnées de la station de base (SBi), de la constellation (Ci) et du routeur (Rij) associés audit terminal mobile (Tijk).

13. Installation selon l'une des revendications 9 à 12 en combinaison avec l'une des revendications 5 à 8, **caractérisée en ce qu'**elle comporte un module de mises à jour agencé pour mettre à jour ladite base de données (BD) en cas de modification de composition d'une constellation (Ci).

14. Installation selon l'une des revendications 4 à 13, **caractérisée en ce que** le module de gestion de chaque routeur mobile (Rij) est agencé pour attribuer des portions de bande passante à chacun des terminaux mobiles (Tijk) qui sont enregistrés auprès de son routeur mobile.

15. Installation selon l'une des revendications précédentes, **caractérisée en ce qu'**en cas de circulation des constellations (Ci) de routeurs (Rij) selon un premier et un second sens opposés, on prévoit des premières stations de base (SBi) pour les constellations (Ci) circulant selon ledit premier sens et des secondes stations de base (SB'i) pour les constellations (C'i) circulant selon ledit second sens.

16. Routeur (Rij) de données pour une installation selon l'une des revendications 1 à 15, **caractérisé en ce qu'**il est mobile et comprend des moyens d'émission/réception pour communiquer avec les autres routeurs (Rij) et avec des stations de base fixes (SBi), et un module de gestion et un module d'interrogation lui permettant d'identifier un routeur voisin qui circule dans le même sens que lui sur une trajectoire et qui le précède ou qui le suit, le module de gestion étant en outre apte à recevoir les coordonnées de la dite station de base (SBi) autorisant le routeur (Rij) à échanger des données directement avec celle-ci (SBi), afin d'établir un relais de données ascendant ou descendant par transfert de données soit au routeur (Rij) qui le précède ou qui le suit, soit à la station de base (SBi) ou le routeur (Rij) qui le suit.

17. Procédé d'échange de données entre terminaux, **caractérisé en ce qu'**il comprend les étapes suivantes :
a) prévoir au moins une station de base (SBi) raccordée à au moins un réseau de communications, des terminaux mobiles (Tijk) et des routeurs de données (Rij) mobiles,
b) former des groupes (Gij) de terminaux mobiles (Tijk) associés chacun à un routeur mobile (Rij), et former au moins une constellation (Ci) avec des routeurs qui sont mobiles indépendamment les uns des autres mais qui circulent tous selon un même sens relativement à une trajectoire, et
c) ordonner les routeurs mobiles (Rij) de chaque constellation (Ci) les uns par rapport aux autres entre un premier routeur (Ri1) et un dernier routeur (RiM), seul ledit premier routeur d'une constellation étant autorisé à communiquer avec ladite station de base (SBi), et fournir à chaque routeur mobile (Rij) les coordonnées du routeur mobile qui le précède et/ou du routeur mobile qui le suit, de manière à permettre un relais de données ascendant ou descendant par transfert d'un routeur au routeur qui le précède ou qui le suit au sein d'une même constellation.

18. Procédé selon la revendication 17, **caractérisé en ce qu'**à l'étape a) on forme au moins deux constellations (C1,C2) associées à des stations de base différentes (SB1,SB2).

19. Procédé selon l'une des revendications 17 et 18, **caractérisé en ce qu'**à l'étape a) on adresse un message test à destination des routeurs (Rij) d'une même constellation (Ci), en requérant une réponse, puis on désigne en tant que premier routeur (Ri1) l'un desdits routeurs de la constellation, en fonction des réponses reçues, et enfin on transmet au premier routeur (Ri1) l'adresse de la station de base (SBi) associée à la constellation.

20. Procédé selon la revendication 19, **caractérisé en ce qu'**il comprend une étape complémentaire dans laquelle un premier routeur (RiM) s'apprêtant à quitter sa constellation (Ci) adresse i) au routeur mobile qui le suit dans ladite constellation un premier message lui communiquant l'adresse de la station de base (SBi) associée à ladite constellation et le désignant en tant que premier routeur (Ri1), et ii) à la station de base à laquelle il est encore associé un second message signalant qu'il quitte la constellation et fournissant les coordonnées du nouveau premier routeur.

21. Procédé selon l'une des revendications 17 à 20, **caractérisé en ce qu'**il comprend une étape complémentaire dans laquelle chaque routeur mobile (Rij) s'apprêtant à quitter une constellation (Ci) adresse au routeur mobile qui le suit un troisième message dans lequel il lui signale qu'il quitte la constellation.

22. Procédé selon la revendication 21, **caractérisé en ce que** dans ladite étape complémentaire on fournit dans ledit troisième message les coordonnées du routeur mobile qui précède le routeur mobile qui s'en va.

23. Procédé selon l'une des revendications 17 à 22, **caractérisé en ce qu'**en cas de sortie d'un routeur mobile (Rij) d'une constellation (Ci) on prévoit une étape supplémentaire dans laquelle ledit routeur mobile détermine les coordonnées d'un routeur mobile d'une autre constellation, de manière à s'enregistrer auprès de celui-ci et signaler qu'il fait désormais partie de sa constellation.

24. Procédé selon l'une des revendications 17 à 23, **caractérisé en ce qu'**à l'étape b) chaque terminal mobile (Tijk) se met à l'écoute des données échangées par les routeurs mobiles (Rij) de manière à sélectionner l'un d'entre eux, en fonction d'un critère choisi, puis lui adresser un quatrième message destiné à se faire enregistrer auprès de lui.

25. Procédé selon l'une des revendications 17 à 24, **caractérisé en ce qu'**à l'étape a) on prévoit une base de données (BD) propre à stocker au moins une table de routage, et à l'étape b) on stocke dans ladite table de routage les coordonnées de chaque station de base (SBi), le sens de déplacement des routeurs (Rij) au sein de chaque constellation (Ci), les coordonnées des routeurs (Rij) au sein de chaque constellation (Ci), les coordonnées de chaque terminal mobile (Tijk) associé à chaque routeur (Rij).

26. Procédé selon la revendication 25, **caractérisé en ce qu'**en cas de requête de transfert de données entre un terminal quelconque et un terminal mobile (Tijk), on extrait de ladite base de données (BD) les coordonnées de la station de base (SBi) à laquelle est associée ledit terminal mobile.

27. Procédé selon l'une des revendications 17 à 26, **caractérisé en ce qu'**à chaque fois qu'un routeur (Rij) d'une constellation (Ci) reçoit des données destinées à un terminal mobile (Tijk) de la constellation (Ci), on prévoit une étape dans laquelle le routeur mobile détermine si ledit terminal est enregistré auprès de lui, et en fonction du résultat de cette détermination il transmet les données audit terminal mobile (Tijk) ou il transfère lesdites données au routeur mobile qui le suit.

28. Procédé selon la revendication 27, **caractérisé en ce qu'**en cas de requête de transfert de données entre un terminal quelconque et un terminal mobile (Tijk) d'une constellation (Ci), on extrait de la base de données (BD) les coordonnées de la station de base (SBi) et/ou du routeur (Rij) associés audit terminal mobile (Tijk).

29. Procédé selon l'une des revendications 25 à 28, **caractérisé en ce qu'**en cas de modification de la composition d'une constellation (Ci) on prévoit une étape de mise à jour de la base de données (BD).

30. Procédé selon l'une des revendications 17 à 29, **caractérisé en ce qu'**elle comprend une étape dans laquelle on attribue des portions de bande passante à certains au moins des terminaux mobiles (Tijk) qui sont enregistrés auprès des routeurs mobiles (Rij).

31. Utilisation du procédé, de l'installation et du routeur selon l'une des revendications précédentes, dans le domaine des véhicules de transport équipés d'au moins un routeur et choisis parmi le train, la rame de métro, le tramway, le bus, le car, la voiture, le camion, le bateau, l'avion.

## Patentansprüche

1. Anordnung zum Austausch von Daten zwischen Endgeräten, mit wenigstens einer Basisstation (SBi), die mit wenigstens einem Kommunikationsnetz verbunden ist, und einer Mehrzahl von Gruppen (Gij) von mobilen Endgeräten (Tijk), die jeweils einem mobilen Datenrouter (Rij) zugeordnet sind,
**dadurch gekennzeichnet, dass** die Router unabhängig voneinander mobil sind und dazu geeignet sind, in wenigstens eine Konstellation (Ci) eingeordnet zu werden, in der sie in einer Reihe von einem ersten Router (Ri1) bis zu einem letzten Router (RiM) angeordnet sind, sich bezogen auf einen gegebenen Weg alle in einer Richtung bewegen und den vor ihnen befindlichen mobilen Router und/oder den hinter ihnen befindlichen mobilen Router kennen, derart, dass eine aufsteigende oder absteigende Datenübermittlung durch Weiterleitung von einem Router zu dem in derselben Konstellation vor oder hinter diesem befindlichen Router ermöglicht ist, wobei es nur dem ersten Router (Ri1) einer Konstellation gestattet ist, mit der Basisstation (SBi) zu kommunizieren.

2. Anordnung nach Anspruch 1,
**dadurch gekennzeichnet, dass** sie wenigstens zwei Konstellationen (C1, C2) aufweist, die verschiedenen Basisstationen (SB1, SB2) zugeordnet sind.

3. Anordnung nach einem der Ansprüche 1 oder 2,
**dadurch gekennzeichnet, dass** jede Basisstation (SBi) ein Initialisierungsmodul umfasst, das dazu ausgebildet ist, i) eine Testnachricht an die Router (Rij) derselben Konstellation (Ci) zu senden und dabei von jedem eine Antwort anzufordern, ii) einen der Router der Konstellation abhängig von den empfangenen Antworten als ersten Router (Ri1) zu bestimmen und iii) an ein Steuermodul dieses ersten Routers die Adresse der Basisstation zu übermitteln, der die Konstellation (Ci) zugeordnet ist.

4. Anordnung nach einem der Ansprüche 1 bis 3,
**dadurch gekennzeichnet, dass** jeder mobile Router (Rij) ein Steuermodul und ein Abfragemodul umfasst, die dazu ausgelegt sind, die Adresse des sich jeweils davor und/oder jeweils dahinter befindlichen benachbarten mobilen Routers zu ermitteln.

5. Anordnung nach Anspruch 4,
**dadurch gekennzeichnet, dass** das Steuermodul des ersten Routers (Rij) dazu eingerichtet ist, i) eine Zeitspanne festzulegen, in der der erste Router seine Konstellation verlassen wird, und ii) vor Ablauf der Zeitspanne einerseits an das Steuermodul des ihm in der Konstellation (Ci) nachfolgenden mobilen Routers eine erste Nachricht zu senden, in der es diesem die Adresse der dieser Konstellation (Ci) zugeordneten Basisstation (SBi) mitteilt und dessen mobilen Router als ersten Router bestimmt, und andererseits an das Initialisierungsmodul der Basisstation, der es noch zugeordnet ist, eine zweite Nachricht zu senden, die anzeigt, dass sein mobiler Router die Konstellation verlässt, und die Koordinaten des neuen ersten Routers liefert.

6. Anordnung nach einem der Ansprüche 4 oder 5,
**dadurch gekennzeichnet, dass** das Steuermodul jedes mobilen Routers (Rij) dazu eingerichtet ist, an das Steuermodul zumindest des jeweils dahinter befindlichen mobilen Routers eine dritte Nachricht zu senden, in der es diesem anzeigt, dass sein mobiler Router die Konstellation (Ci) verlässt.

7. Anordnung nach Anspruch 6,
**dadurch gekennzeichnet, dass** das Steuermodul jedes mobilen Routers (Rij) dazu eingerichtet ist, in der dritten Nachricht die Koordinaten desjenigen mobilen Routers zu liefern, der sich vor seinem mobilen Router befindet.

8. Anordnung nach einem der Ansprüche 4 bis 7,
**dadurch gekennzeichnet, dass** das Abfragemodul jedes eine Konstellation verlassenden mobilen Routers (Rij) dazu eingerichtet ist, die Koordinaten eines mobilen Routers einer anderen Konstellation zu ermitteln, um sich bei diesem registrieren und anzuzeigen, dass er künftig zu dessen Konstellation gehört.

9. Anordnung nach einem der Ansprüche 1 bis 8,
**dadurch gekennzeichnet, dass** jedes mobile Endgerät (Tijk) ein Registrierungsmodul umfasst, welches dazu eingerichtet ist, wenigstens einige der durch die mobilen Router (Rijk) ausgetauschten Daten abzuhören und einen der abgehörten mobilen Router in Abhängigkeit von einem gewählten Kriterium auszuwählen, um an diesen eine vierte Nachricht zu senden, die zur Registrierung bei diesem mobilen Router bestimmt ist.

10. Anordnung nach einem der Ansprüche 2 bis 8,
**dadurch gekennzeichnet, dass** sie eine Datenbank (BD) umfasst, in der wenigstens eine Routing-Tabelle gespeichert ist, die die Koordinaten jeder Basisstation (SBi), die Bewegungsrichtung der Router (Rij) in jeder Konstellation (Ci), die Koordinaten der Router (Rij) in jeder Konstellation (Ci) und die Koordinaten jedes einem jeweiligen Router zugeordneten mobilen Endgeräts (Tijk) enthält, sowie Abfragemittel, die dazu eingerichtet sind, im Fall der Anforderung einer Datenübertragung zwischen einem beliebigen Endgerät und einem mobilen Endgerät die Koordinaten der Basisstation, der das mobile Endgerät zugeordnet ist, aus der Datenbank zu holen.

11. Anordnung nach einem der Ansprüche 4 bis 10,
**dadurch gekennzeichnet, dass** das Steuermodul jedes mobilen Routers (Rij) dazu eingerichtet ist, bei Empfang von Daten, die für ein mobiles Endgerät (Tjik) seiner Konstellation (Ci) bestimmt sind, zu ermitteln, ob das Endgerät bei seinem Router registriert ist, und je nach Ergebnis dieser Ermittlung die Daten an das mobile Endgerät zu übertragen oder die Daten an den nachfolgende mobilen Router zu übertragen.

12. Anordnung nach einem der Ansprüche 10 oder 11,
**dadurch gekennzeichnet, dass** die Abfragemittel ebenfalls dazu eingerichtet sind, im Fall der Anforderung einer Datenübertragung zwischen einem beliebigen Endgerät und einem mobilen Endgerät (Tijk) aus der Datenbank die Koordinaten der Basisstation (SBi), der Konstellation (Ci) und des Routers (Rij) zu holen, die dem mobilen Endgerät zugeordnet sind.

13. Anordnung nach einem der Ansprüche 9 bis 12 in Verbindung mit einem der Ansprüche 5 bis 8,
**dadurch gekennzeichnet, dass** sie ein Aktualisierungsmodul umfasst, welches dazu eingerichtet ist, die Datenbank (BD) bei Änderung der Zusammensetzung einer Konstellation (Ci) zu aktualisieren.

14. Anordnung nach einem der Ansprüche 4 bis 13,
**dadurch gekennzeichnet, dass** das Steuermodul jedes mobilen Routers (Rij) dazu eingerichtet ist, jedem der mobilen Endgeräte (Tijk), die bei seinem mobilen Router registriert sind, Abschnitte der Bandbreite zuzuweisen.

15. Anordnung nach einem der vorhergehenden Ansprüche,
**dadurch gekennzeichnet, dass** bei einer Bewegung von Konstellationen (Ci) von Routern (Rij) in einer ersten und einer zweiten entgegengesetzten Richtung erste Basisstationen (SBi) für die in der ersten Richtung sich bewegenden Konstellationen (Ci) und zweite Basisstationen (SB'i) für die in der zweiten Richtung sich bewegenden Konstellationen (C'i) vorgesehen sind.

16. Datenrouter (Rij) für eine Anordnung nach einem der Ansprüche 1 bis 15,
**dadurch gekennzeichnet, dass** er mobil ist und Sende-/Empfangsmittel zum Kommunizieren mit den anderen Routern (Rij) und mit stationären Basisstationen (SBi) sowie ein Steuermodul und ein Abfragemodul umfasst, die es ihm ermöglichen, einen benachbarten Router zu identifizieren, der sich auf einer Bahn in der gleichen Richtung bewegt wie er selbst und sich vor oder hinter ihm befindet, wobei das Steuermodul ferner dazu ausgelegt ist, die Koordinaten der Basisstation (SBi) zu empfangen, was es dem Router (Rij) ermöglicht, mit dieser (SBi) Daten direkt auszutauschen, um eine aufsteigende oder absteigende Datenübermittlung durch Übertragung von Daten entweder an den Router (Rij) vor ihm oder hinter ihm oder an die Basisstation (SBi) oder den ihm nachfolgenden Router (Rij) herzustellen.

17. Verfahren zum Austausch von Daten zwischen Endgeräten,
**dadurch gekennzeichnet, dass** es die folgenden Schritte umfasst:
a) Bereitstellen wenigstens einer mit wenigstens einem Kommunikationsnetz verbundenen Basisstation (SBi), von mobilen Endgeräten (Tijk) und mobilen Datenroutern (Rij),
b) Bilden von Gruppen (Gij) von mobilen Endgeräten (Tijk), die jeweils einem mobilen Router (Rij) zugeordnet sind, und Bilden wenigstens einer Konstellation (Ci) mit Routern, die unabhängig voneinander mobil sind, sich jedoch bezogen auf einen Weg alle in derselben Richtung bewegen, und
c) Einordnen der Router (Rij) jeder Konstellation (Ci) in eine Reihe von einem ersten Router (Ri1) bis zu einem letzten Router (RiM), wobei es nur dem ersten Router einer Konstellation gestattet ist, mit der Basisstation (SBi) zu kommunizieren, und Liefern der Koordinaten des jeweils davor befindlichen mobilen Routers und/oder des jeweils dahinter befindlichen mobilen Routers an jeden mobilen Router (Rij), um eine aufsteigende oder absteigende Datenübermittlung durch Weiterleitung von einem Router zu dem in derselben Konstellation davor oder dahinter befindlichen Router zu ermöglichen.

18. Verfahren nach Anspruch 17,
**dadurch gekennzeichnet, dass** bei Schritt a) wenigstens zwei Konstellationen (C1, C2) gebildet werden, die unterschiedlichen Basisstationen (SB1, SB2) zugeordnet sind.

19. Verfahren nach einem der Ansprüche 17 oder 18,
**dadurch gekennzeichnet, dass** bei Schritt a) eine Testnachricht unter Anforderung einer Antwort an die Router (Rij) derselben Konstellation (Ci) gesandt wird, danach abhängig von den empfangenen Antworten einer der Router der Konstellation als erster Router (Ri1) bestimmt wird und schließlich an den ersten Router (Ri1) die Adresse der Basisstation (SBi) übertragen wird, die der Konstellation (Ci) zugeordnet ist.

20. Verfahren nach Anspruch 19,
**dadurch gekennzeichnet, dass** es einen zusätzlichen Schritt umfasst, bei dem ein erster Router (RiM), der im Begriff steht, seine Konstellation (Ci) zu verlassen, i) an den ihm in dieser Konstellation nachfolgenden mobilen Router eine erste Nachricht sendet, mit der er diesem die Adresse der dieser Konstellation zugeordneten Basisstation (SBi) mitteilt und ihn als ersten Router (Ri1) bestimmt, und ii) an die Basisstation, der er noch zugeordnet ist, eine zweite Nachricht sendet, mit der er anzeigt, dass er die Konstellation verlässt, und mit der er die Koordinaten des neuen ersten Routers liefert.

21. Verfahren nach einem der Ansprüche 17 bis 20,
**dadurch gekennzeichnet, dass** es einen zusätzlichen Schritt umfasst, bei dem jeder mobile Router (Rij), der im Begriff steht, eine Konstellation (Ci) zu verlassen, an den Router hinter ihm eine dritte Nachricht sendet, mit der er diesem anzeigt, dass er die Konstellation verlässt.

22. Verfahren nach Anspruch 21,
**dadurch gekennzeichnet, dass** bei diesem zusätzlichen Schritt in der dritten Nachricht die Koordinaten des mobilen Routers geliefert werden, der sich vor dem ausscheidenden mobilen Router befindet.

23. Verfahren nach einem der Ansprüche 17 bis 22,
**dadurch gekennzeichnet, dass** beim Ausscheiden eines mobilen Routers (Rij) aus einer Konstellation (Ci) ein zusätzlicher Schritt vorgesehen ist, bei dem der mobile Router die Koordinaten eines mobilen Routers einer anderen Konstellation ermittelt, um sich bei diesem registrieren und anzuzeigen, dass er künftig zu dessen Konstellation gehört.

24. Verfahren nach einem der Ansprüche 17 bis 23,
**dadurch gekennzeichnet, dass** bei Schritt b) jedes mobile Endgerät (Tijk) von den mobilen Routern (Rij) ausgetauschte Daten abhört, um nach einem gewählten Kriterium einen von ihnen auszuwählen und an diesen anschließend eine vierte Nachricht zu senden, die dazu bestimmt ist, sich bei diesem registrieren.

25. Verfahren nach einem der Ansprüche 17 bis 24,
**dadurch gekennzeichnet, dass** bei Schritt a) eine zur Speicherung wenigstens einer Routing-Tabelle geeignete Datenbank (BD) vorgesehen wird und bei Schritt b) in dieser Routing-Tabelle die Koordinaten jeder Basisstation (SBi), die Bewegungsrichtung der Router (Riji) in jeder Konstellation (Ci), die Koordinaten der Router (Rij) in jeder Konstellation (Ci) und die Koordinaten jedes einem jeweiligen Router zugeordneten mobilen Endgeräts (Tijk) gespeichert werden.

26. Verfahren nach Anspruch 25,
**dadurch gekennzeichnet, dass** bei Anforderung einer Datenübertragung zwischen einem beliebigen Endgerät und einem mobilen Endgerät (Tijk) aus der Datenbank (BD) die Koordinaten der Basisstation (SBi) geholt werden, der das mobile Endgerät zugeordnet ist.

27. Verfahren nach einem der Ansprüche 17 bis 26,
**dadurch gekennzeichnet, dass** jedes Mal, wenn ein Router (Rij) einer Konstellation (Ci) Daten empfängt, die für ein mobiles Endgerät (Tijk) der Konstellation (Ci) bestimmt sind, ein Schritt vorgesehen wird, bei dem der mobile Router ermittelt, ob das Endgerät bei ihm registriert ist, und er je nach Ergebnis dieser Ermittlung die Daten an das mobile Endgerät (Tijk) oder an den mobilen Router hinter ihm überträgt.

28. Verfahren nach Anspruch 27,
**dadurch gekennzeichnet, dass** bei Anforderung einer Datenübertragung zwischen einem beliebigen Endgerät und einem mobilen Endgerät (Tijk) einer Konstellation (Ci) aus der Datenbank (BD) die Koordinaten der Basisstation (SBi) und/oder des Routers geholt werden, die dem mobilen Endgerät (Tijk) zugeordnet sind.

29. Verfahren nach einem der Ansprüche 25 bis 28,
**dadurch gekennzeichnet, dass** bei Änderung der Zusammenstellung einer Konstellation (Ci) ein Schritt zum Aktualisieren der Datenbank (BD) vorgesehen wird.

30. Verfahren nach einem der Ansprüche 17 bis 29,
**dadurch gekennzeichnet, dass** es einen Schritt umfasst, bei dem wenigstens einigen der bei den mobilen Routern (Rij) registrierten mobilen Endgeräte (Tijk) Teile der Bandbreite zugewiesen werden.

31. Verwendung des Verfahrens, der Anordnung und des Routers nach einem der vorhergehenden Ansprüche im Bereich der Verkehrsfahrzeuge, die mit wenigstens einem Router ausgestattet sind und aus Zug, U-Bahn, Trambahn, Bus, Reisebus, Pkw, Lkw, Schiff und Flugzeug ausgewählt sind.

## Claims

1. An installation for exchanging data between terminals, comprising at least one base station (SBi) connected to at least one communications network, a multiplicity of groups (Gij) of mobile terminals (Tijk) each associated with a given mobile data router (Rij), **characterized in that** the said routers are movable independently from one another and are suitable for being grouped together in at least one constellation (Ci) in which they are ordered relative to one another between a first router (Ri1) and a last router (RiM), all traveling in the same direction relative to a given trajectory and knowing at least which is the mobile router preceding them and/or the mobile routeur following them, in such a manner as enable data to be relayed upwards or downwards by being transferred from a router to the preceding or following router within the same constellation, with only said first router (Ri1) of a constellation being authorized to communicate with said base station (SBi).

2. An installation according to claim 1, **characterized in that** it includes at least two constellations (C1, C2) associated with different base stations (SB1, SB2).

3. An installation according to one of claims 1 and 2, **characterized in that** each base station (SBi) includes an initialization module arranged: i) to send a test message to the routers (Rij) of a given constellation (Ci) requesting each of them to provide a response; ii) to designate one of said routers of the constellation as the first router (Ri1) as a function of the responses received; and iii) to transmit the address of the base station to which the constellation (Ci) is associated to a management module of said first router.

4. An installation according to any one of claims 1 to 3, **characterized in that** each mobile router (Rij) includes a management module and an interrogation module suitable for determining the address of a preceding and/or following mobile router adjacent thereto.

5. An installation according to claim 4, **characterized in that** said management module of the first router (Rij) is arranged: i) to determine a time interval during which said first router is going to leave its constellation; and ii) before the expiry of said time interval, to send firstly to the management module of the mobile router following it in the constellation (Ci) a first message in which it sends the address of the base station (SBi) associated with the constellation (Ci) and designates its mobile router as first router (Ri1), and secondly a second message to the initialization module of the base station with which it is still associated informing the base station that its mobile router is leaving the constellation and providing the coordinates of the new first router.

6. An installation according to one of claims 4 and 5, **characterized in that** said management module of each mobile router (Rij) is arranged to send a third message to the management module of at least the mobile router following it, which message informs the following mobile router that its mobile router is leaving the constellation (Ci).

7. An installation according to claim 6, **characterized in that** said management module of each mobile router (Rij) is arranged to provide in said third message the coordinates of the mobile router which precedes its mobile router.

8. An installation according to any one of claims 4 to 7, **characterized in that** the interrogation module of each mobile router (Rij) which has just left the constellation is arranged to determine the coordinates of a mobile router in another constellation so as to become registered therewith and inform said mobile router that it has now become part of that router's constellation.

9. An installation according to any one of claims 1 to 8, **characterized in that** each mobile terminal (Tijk) includes a registration module arranged to listen to at least some of the data exchanged by the mobile routers (Rij) and to select one of said listened-to mobile routers on the basis of a selection criterion in order to send a fourth message thereto in order to become registered with said mobile router.

10. An installation according to any one of claims 2 to 8, **characterized in that** it includes a database (BD) in which there is stored at least a routing table comprising the coordinates of each base station (SBi), the travel direction of the routers (Rij) within each constellation (Ci), the coordinates of the routers (Rij) within each constellation (Ci), and the coordinates of each mobile terminal (Tijk) associated with each router, together with interrogation means arranged in the event of a request to transfer data between any terminal and a mobile terminal, to extract from said database the coordinates of the base station with which said mobile terminal is associated.

11. An installation according to any one of claims 4 to 10, **characterized in that** the management module of each mobile router (Rij) is arranged on receiving data destined for a mobile terminal (Tijk) of its constellation (Ci) to determine whether said terminal is registered with its router, and as a function of the result of said determination, either to transmit the data to said mobile terminal, or else to transfer said data to the following mobile router.

12. An installation according to claim 10 or claim 11, **characterized in that** said interrogation means are also arranged in the event of a request to transfer data between any terminal and a mobile terminal (Tijk), to extract from said database (BD) the coordinates of the base station (SBi), of the constellation (Ci), and of the router (Rij) associated with said mobile terminal (Tijk).

13. An installation according to any one of claims 9 to 12 in combination with any one of claims 5 to 8, **characterized in that** it includes an updating module arranged to update the database (BD) in the event of a change in the composition of a constellation (Ci).

14. An installation according to any one of claims 4 to 13, **characterized in that** the management module of each mobile router (Rij) is arranged to allocate portions of bandwidth to each of the mobile terminals (Tijk) which are registered with its mobile router.

15. An installation according to any preceding claim, **characterized in that** in the event of constellations (Ci) of routers (Rij) traveling in first and second opposite directions, first base stations (SBi) are provided for the constellations (Ci) traveling in said first direction, and second base stations (SB'i) are provided for the constellations (C'i) traveling in said second direction.

16. Data routeur (Rij) for an installation according to anyone of claims 1 to 15, **characterized in that** it is mobile and comprises emitter/receiver means for communicating with the other routeurs (Rij) and with fixed base stations (SBi), and a management module and an interrogation module allowing the said routeur to identify an adjacent routeur which travels in the same direction on a trajectory and which is preceding or following the said routeur, the management module being further suitable for receiving the coordinates of the said base station (SBi) authorizing the routeur (Rij) to exchange data directly with the base station (SBi), in order to enable data to be relayed upwards or downwards by being transfered either to the preceding or following routeur (Rij) or to the base station (SBi) or to the following routeur (Rij).

17. A method of exchanging data between terminals, the method being **characterized in that** comprises the following steps:
a) providing at least one base station (SBi) connected to at least one communications network, mobile terminals (Tijk), and mobile data routers (Rij);
b) forming groups (Gij) of mobile terminals (Tijk) each associated with a mobile router (Rij), and forming at least one constellation (Ci) with mobile routers all traveling in the same direction relative to a trajectory; and
c) ordering the mobile routers (Rij) in each constellation (Ci) relative to one another between a first router (Ri1) and a last router (RiM), only the first router of a constellation being authorized to communicate with said base station (SBi), and providing each mobile router (Rij) with at least the coordinates of the mobile router that precedes it so as to enable data to be forwarded upwards by being transferred from one router to another within a given constellation.

18. A method according to claim 17, **characterized in that** in step a) at least two constellations (C1, C2) are formed associated with different base stations (SB1, SB2).

19. A method according to one of claims 17 and 18, **characterized in that** in step a) a test message is sent to the routers (Rij) of a given constellation (Ci) requesting a response, and then as a function of the received responses one of said routers of the constellation is designated as first router (Ri1), and finally the address of the base station (SBi) associated with the constellation is sent to the first router (Ri1).

20. A method according to claim 19, **characterized in that** it includes an additional step in which a first router (Ri1) preparing to leave its constellation (Ci) sends: i) to the mobile router following it in the constellation a first message giving it the address of the base station (SBi) associated with said constellation and designating it as first router (Ri1); and ii) to the base station with which it is still associated a second message informing it that it is leaving the constellation and providing the coordinates of the new first router.

21. A method according to any one of claims 17 to 20, **characterized in that** it includes an additional step in which each mobile router (Rij) preparing to leave a constellation (Ci) sends a third message to the mobile router following it informing said following router that the sending router is leaving the constellation.

22. A method according to claim 21, **characterized in that** in said additional step, the third message includes the coordinates of the mobile router preceding the mobile router that is leaving.

23. A method according to any one of claims 17 to 22, **characterized in that** when a mobile router (Rij) leaves a constellation (Ci), an additional step is provided in which said mobile router determines the coordinates of a mobile router in another constellation so as to become registered therewith, and informs it that it now forms part of its constellation.

24. A method according to any one of claims 17 to 23, **characterized in that** in step b) each mobile terminal (Tijk) listens to the data exchanged by the mobile routers (Rij) so as to select one of them as a function of a selection criterion, and then sends a fourth message to the selected router in order to become registered therewith.

25. A method according to any one of claims 17 to 24, **characterized in that** in step a) a database (BD) is provided suitable for storing at least a routing table, and in step b) there are stored in said routing table the coordinates of each base station (SBi), the travel direction of the routers (Rij) within each constellation (Ci), the coordinates of the routers (Rij) within each constellation (Ci), and the coordinates of each mobile terminal (Tijk) associated with each router (Rij).

26. A method according to claim 25, **characterized in that** in the event of a request to transfer data between any terminal and a mobile terminal (Tijk), the coordinates of said base station (SBi) with which said mobile terminal is associated are extracted from said database (BD).

27. A method according to any one of claims 17 to 26, **characterized in that** each time a router (Rij) of a constellation (Ci) receives data destined for a mobile terminal (Tijk) of the constellation (Ci), a step is provided in which the mobile router determines whether said terminal is registered therewith, and as a function of the result of this determination either transmits the data to said mobile terminal (Tijk) or else transfers said data to the following mobile router.

28. A method according to claim 27, **characterized in that** in the event of a request to transfer data between any terminal and a mobile terminal (Tijk) of a constellation (Ci), the coordinates of base station (SBi) and/or of the router (Rij) associated with said mobile terminal (Tijk) are extracted from the database (BD).

29. A method according to any one of claims 25 to 28, **characterized in that** in the event of a change in the composition of a constellation (Ci), a step of updating the database (BD) is provided.

30. A method according to any one of claims 17 to 29, **characterized in that** it includes a step in which portions of bandwidth are allocated to at least some of the mobile terminals (Tijk) which are registered with the mobile routers (Rij).

31. The use of the method, the installation, and the router according to any preceding claim, in the field of transport vehicles fitted with at least one router and selected from: trains, subway trains, trams, buses, coaches, cars, trucks, boats, airplanes.
